# EUROPÄISCHE PATENTSCHRIFT

(11) **EP 0 613 588 B1**
(45) Veröffentlichungstag und Bekanntmachung des Hinweises auf die Patenterteilung: **08.10.1997**
(21) Anmeldenummer: 92923753.5
(22) Anmeldetag: 19.11.1992
(51) Int. Cl.: H01M 8/04, H01M 8/24

(54) **VERFAHREN ZUR AUSKOPPLUNG VON WÄRME AUS BRENNSTOFFZELLEN UND WÄRMEAUSKOPPLUNGSEINRICHTUNG ZUR DURCHFÜHRUNG DES VERFAHRENS**
PROCESS AND DEVICE FOR DISENGAGING HEAT FROM FUEL CELLS
PROCEDE PERMETTANT DE DEGAGER DE LA CHALEUR DE PILES A COMBUSTIBLE ET DISPOSITIF DE MISE EN OEUVRE DUDIT PROCEDE

(30) Priorität: 19.11.1991 DE 4137968
(43) Veröffentlichungstag der Anmeldung: 07.09.1994
(73) Patentinhaber: Winkler, Wolfgang, Dr. Prof., D-21423 Winsen Luhe (DE)
(72) Erfinder: WINKLER, Wolfgang, D-2090 Winsen (DE); STOYE, Thorsten, D-2000 Hamburg 60 (DE); REITER, Kurt, D-8520 Erlangen (DE); DRENCKHAHN, Wolfgang, D-8520 Erlangen (DE); STOCK, Eberhard, D-8520 Erlangen (DE)
(74) Vertreter: Dreiss, Fuhlendorf, Steimle & Becker
(86) Internationale Anmeldenummer: EP9202667
(87) Internationale Veröffentlichungsnummer: WO9310567

(56) Entgegenhaltungen:
- EP-A- 0 055 011
- EP-A- 0 374 636
- EP-A- 0 473 540
- CH-A- 678 775
- DE-A- 4 021 097
- DE-C- 2 604 982
- US-A- 4 490 445
- Patent Abstracts of Japan, Vol. 12, No. 385, E-668, abstract of JP, A, 63-128559 (MITSUBISHI HEAVY IND LTD) 1 June 1988 (01.06.88)

## Beschreibung

Die Erfindung bezieht sich auf ein Verfahren zur Nutzung der Abwärme einer Brennstoffzelle, insbesondere einer Hochtemperatur-Brennstoffzelle oder eines Hochtemperatur-Brennstoffzellen-Blocks, und auf eine Wärmeauskopplungseinrichtung zur Durchführung dieses Verfahrens.

Brennstoffzellen enthalten eine Anode und eine Kathode, die durch einen unmittelbar anliegenden sauerstoffionenleitenden Elektrolyten getrennt sind. Diese Elektrolyte können flüssig sein oder, wie bei Hochtemperatur-Brennstoffzellen, aus einem Festkörper, wie zum Beispiel Zirkonoxid mit geringen Zusätzen von Yttriumoxid, bestehen. Durch geeignete Kanalsysteme wird Brennstoff, meist Wasserstoff, zur Anode und Sauerstoff oder Verbrennungsluft zur Kathode geleitet, und das das Oxidationsprodukt H₂O enthaltende Abgas der Anodenseite und das Abgas aus der Kathodenseite ausgetragen. Brennstoffzellen können den Brennstoff mit höherem Wirkungsgrad und geringerer Belastung für die Umwelt in elektrische Energie umsetzen, als das bisher bekannte konventionelle Verbrennungskraftmaschinen, deren Wirkungsgrad durch den sogenannten Carnot'schen Prozeß begrenzt ist, zu tun vermögen.

Bei heute laufenden Entwicklungsvorhaben versucht man auch die beim Betrieb von Brennstoffzellen, insbesondere bei Hochtemperatur-Brennstoffzellen, anfallende Wärme auszunutzen. So gehen Entwicklungen von Hochtemperatur-Brennstoffzellen-Kraftwerken in der Regel von der Kombination von Hochtemperatur-Brennstoffzellen-Blöcken mit Gasturbinenanlagen aus, wobei die Hochtemperatur-Brennstoffzelle die Funktion der Brennkammer der Gasturbine übernimmt.

Die neben dem elektrischen Strom entstehende Abwärme wird heute durch einen hohen Luftüberschuß an der Kathodenseite der Hochtemperatur-Brennstoffzelle abgeführt. Dies hat zur Folge, daß wegen des honen Luftmassenstroms entsprechend hohe Verdichterleistungen erforderlich sind, die von der Gasturbine aufgebracht werden müssen. Weil die zugeführte Luft und auch der Brennstoff vorgewärmt werden müssen, damit keine thermische Überbranspruchung des Keramikwerkstoffes der Hochtemperatur-Brennstoffzelle auftritt (vergleiche Wendt H., Plzak V. Brennstoffzellen, VDI-Verlag, 1. Auflage, Düsseldorf 1990), führt das dazu, daß ein wesentlicher Teil der Abgaswärme zur Aufheizung von Luft inklusive Überschußluft und Brennstoff benötigt werden. Bei ungünstigen Schaltungen kanndieser Energiebedarf sogar zur deutlichen Minderung der elektrischen Nettoleitung des Hochtemperatur-Brennstoffzellen-Blocks führen. Meist verbleibt nur ein kleiner Teil der Massenströme auf der Anoden- und Kathodenseite für eine weitere Nutzung der thermischen Energie.

Der Erfindung liegt die Aufgabe zugrunde, den Gesamtwirkungsgrad von Brennstoffzellen, insbesondere von Hochtemperatur-Brennstoffzellen oder Hochtemperatur-Brennstoffzellen-Blöcken, dadurch zu erhöhen, daß man deren Abwärme möglichst sinnvoll nutzt.

Diese Aufgabe wird durch die Merkmale der Ansprüche 1 und 20 gelöst. Weitere Ausgestaltungen der Erfindung sind den Ansprüchen 2 bis 9 und 11 bis 21 zu entnehmen.

Bezüglich des Verfahrens wird eine sinnvolle Abwärmenutzung dadurch erreicht, daß die ausgekoppelte Warme erfindungsgemäß sowohl zur Vorwärmung von zuströmendem Sauerstoff oder Sauerstoffträgergas als auch zur Nutzung in einer der Brennstoffzelle bzw. dem Brennstonzellen-Block nachgeschalteten oder parallelgeschalteten Anlage herangezogen wird, wobei das aus der Brennstoffzelle bzw. dem Brennstoffzellen-Block ausströmende, einen Wärmeaustrag bewirkende Kathodenabgas und/oder Anodenabgas zunächst durch einen Wärmetauscher zur Vorwärmung des zuströmenden Brennstoffs und/oder Sauerstoffs oder Sauerstoffträgergases geleitet und anschließend zum weiteren Wärmeaustrag an einer in der Brennstoffzelle bzw. im Brennstoffzellen-Block integrierten Wärmetauscherheizfläche entlanggeleitet wird.

Hierdurch wird nicht nur der Temperaturbereich, in dem diese Abwärme anfällt, optimal genutzt, sondern zugleich auch sichergestellt, daß die Brennstoffzelle von thermischen Spannungen, wie sie sonst durch einströmende kalte Gase erzeugt würden, bewahrt wird. Es können, außer technisch reinem Sauerstoff, auch sauerstoffhaltige Gasgemische, wie zum Beispiel Luft, oder auch solche Gase benutzt werden, die Sauerstoff abspalten können. Darüber hinaus fällt so für die nachgeschaltete oder parallelgeschaltete Anlage eine isotherme Wärmequelle mit einem sehr hohen Temperaturniveau (etwa 1000 °C) an, die sich sowohl für chemische Umsetzungen als auch Carnot-Prozesse einsetzen läßt.

Bezüglich der Einrichtung wird eine sinnvollere Abwärmenutzung dadurch erreicht, daß erfindungsgemäß an der Gaszuführungsleitung zur Kathode bzw. zur Anode einer Brennstoffzelle oder eines Brennstoffzellen-Blocks zumindest ein Wärmetauscher angeschlossen ist, der seinerseits an die Gasabzugsleitung für das Kathodenabgas und/oder das Anodenabgas angeschlossen ist, wobei die Gasabzugsleitung für das Kathodenabgas und/oder Anodenabgas in Strömungsrichtung hinter dem Wärmetauscher für die Gaszuführungsleitung zur Anode und/oder Kathode an einer in die Brennstoffzelle bzw. in den Brennstoffzellen-Block integrierten Wärmetauscherheizfläche angeschlossen ist.

Hierdurch werden die in der Brennstoffzelle einströmenden Medien auf nahezu das gleiche Temperaturniveau angehoben, das die Brennstoffzelle bzw. der Brennstoffzellenblock zum jeweiligen Zeitpunkt gerade inne hat, und es wird darüber hinaus eine isotherme Wärmequelle auf dem hohen Temperaturnivau der Brennstoffzelle für nachgeschaltete oder parallelgeschaltete Anlagen bzw. Anlagenteile bereitgestellt. Mit diesem Aufbau kann mit verhältnismäßig geringen Gasmengen relativ viel Wärme aus der Brennstoffzelle ausgetragen werden.

Unter integrierten Wärmetauscherheizflächen werden sowohl Wärmetauscherheizflächen im Inneren des Brennstoffzellen-Blocks als auch solche, die durch außen am Brennstoffzellen-Block vorstehende Kühlrippen gebildet werden, verstanden. Dabei dürften erstere bei größeren Blockquerschnitten vorteilhafter sein.

Dies hat den weiteren Vorteil, daß durch das erneute Austragen von Wärme durch die gleichen Gasanteile etwa doppelt soviel Wärme durch eine gegebene Abgasmenge ausgetragen wird, so daß die Verbrennungsluftmenge nunmehr ausschließlich nach dem stöchiometrischen Bedarf optimiert werden kann. Das führt dazu, daß die Gaskanäle in der Brennstoffzelle und alle Apparate für einen entsprechend kleineren Massenstrom ausgelegt werden können, als es sonst der Fall wäre. Dies wirkt sich insbesondere auch bei der Verwendung eines Gasverdichters und der zur Vorwärmung der in die Brennstoffzelle einströmenden Gase benötigten Wärmetauscher aus.

Der Wärmeaustrag aus der Brennstoffzelle bzw. dem Brennstoffzellen-Block läßt sich weiter steigern, wenn in Ausgestaltung der Erfindung der der Brennstoffzelle bzw. dem Brennstoffzellen-Block zuströmende Brennstoff und/oder der Sauerstoff bzw. das Sauerstoffträgergas verdichtet wird und wenn das der Brennstoffzelle bzw. dem Brennstoffzellen-Block entströmende Abgas in mindestens einer Gasturbine entspannt wird. Zugleich können hierbei auch alle Gaskanäle und Wärmetauscherquerschnitte verkleinert werden. Hierbei wird zusätzlich auch die elektrische Leistung der Brennstoffzelle bzw. des Brennstoffzellen-Blocks gesteigert. Diese Art der Vorwärmung der zuströmenden Massen und der Kühlung der Brennstoffzelle gestattet es außerdem, mit einfachen Schaltungskonzepten gute elektrische Wirkungsgrade zu erzielen. Erste Berechnungen zeigen, daß damit bei einem elektrischen Wirkungsgrad einer Hochtemperatur-Brennstoffzelle von ca. 60 % für die Gesamtanlage je nach Schaltung und Prozeßbedingungen elektrische Wirkungsgrade von 70 bis 80 % erreichbar sind. Dies gilt inklusive der Verdichterleistung, die bei Anlieferung des bereits verdichteten Brennstoffs unter Umständen schon beim Brennstofflieferanten anfällt.

Eine Voraussetzung für eine weitere Erhöhung des Gesamtwirkungsgrades wird geschaffen, wenn das Abgas der Gasturbine zur Dampfgewinnung in einen der Gasturbine nachgeschalteten Anlagenteil geleitet wird. In diesem Fall steht, zusätzlich zu der in der Brennstoffzelle unmittelbar erzeugten elektrischen Energie, auch Prozeßdampf zur Verfügung, der gegebenenfalls in der Gasturbine und/oder separaten Dampfturbine zur Stromerzeugung genutzt werden kann.

Die Energiegewinnung läßt sich noch weiter steigern, wenn der Gaszuführungsleitung zur Kathode und/oder Anode ein Gasverdichter und der entsprechenden Abgasleitung eine Gasturbine zugeordnet sind. Dabei wird wegen des größeren Gasdrucks sowohl die elektrische Leistung der Brennstoffzelle erhöht als auch der Wärmeaustrag aus der Brennstoffzelle verstärkt.

Wenn im letztgenannten Fall dann auch noch ein Dampferzeuger als Abhitzekessel an die Gasabzugsleitung hinter der Gasturbine angeschlossen ist, und wenn der Dampferzeuger dampfseitig an der Abgasleitung für das Kathodenabgas und/oder Anodenabgas in Strömungsrichtung vor der integrierten Wärmetauscherheizfläche angeschlossen ist, steigt sowohl der Wärmeaustrag aus der Brennstoffzelle bzw. dem Brennstoffzellen-Block als auch die an der Gasturbine abgreifbare Leistung erheblich an. Dies ist wiederum die Voraussetzung, um damit neben dem Gasverdichter einen Generator antreiben zu können.

Die Vorwärmung der der Brennstoffzelle zuströmenden Gase kann deutlich verbessert werden, wenn eine Rezirkulationsleitung stromabwärts der integrierten Wärmetauscher-Heizfläche und/oder integrierten Zwischenüberhitzerheizfläche an die Abgasleitung angeschlossen ist, die die Abgasleitung mit der in den Wärmetauscher für das zuströmende Gas führende Gasabzugsleitung verbindet. Hiermit kann der Wärmeeintrag in den oder die Wärmetauscher so eingestellt werden, daß in allen Betriebszuständen eine hinreichende Aufwärmung der der Brennstoffzelle zuströmenden Gase erreicht wird.

Weitere Ausgestaltungen der Erfindung sind den übrigen Unteransprüchen zu entnehmen.

Ausführungsbeispiele der Erfindung werden anhand dreier Figuren erläutert. Es zeigen:
Figur 1 eine schematische Darstellung der verschiedenen Wege für den Wärmeaustrag aus einer Brennstoffzelle,
Figur 2 ein Hochtemperatur-Brennstoffzellen-Kraftwerk mit einer mit Überdruck betriebenen Brennstoffzelle und nachgeschalteter Gasturbine und
Figur 3 eine schematische Darstellung eines Hochtemperatur-Brennstoffzellen-Kraftwerks mit nachgeschaltetem Abhitzedampferzeuger.

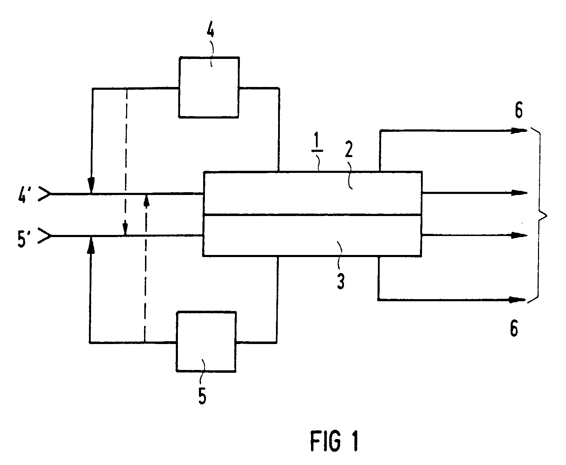

Die Figur 1 verdeutlicht die verschiedenen Wege für den Wärmeaustrag aus einer Brennstoffzelle. Eine Hochtemperatur-Brennstoffzelle 1 ist in dieser Figur 1 in eine Anodenseite 2 und eine Kathodenseite 3 unterteilt. Die Wärmetauscheranordnungen, die in dieser Figur nicht dargestellt sind, ermöglichen eine direkte Auskopplung der beim Betrieb entstehenden Abwärme 4 auf der Anodenseite zur Vorwärmung des Brennstoffs 4' und eine Auskopplung der entstehenden Abwärme 5 auf der Kathodenseite zur Vorwärmung des Sauerstoffs oder der Verbrennungsluft 5'. Des weiteren zeigen die Pfeile 6 den mittelbaren und unmittelbaren Austrag von Abwärme sowohl aus der Anodenseite 2 als auch aus der Kathodenseite 3 zur weiteren Ausnutzung in einem nachgeschalteten Prozeß. Unter "nachgeschaltetem Prozeß" werden hier sowohl die Dampferzeugung und die Energie-Ausnutzung des Dampfes in einer Turbine als auch die Erzeugung von Prozeßwärme in Form von Heizleistung zur Förderung von chemischen Prozessen verstanden. Auch wird durch die gestrichelten Pfeile angedeutet, daß mit der Abwärme 4 der Anodenseite 2 auch die Kathodenseite 3 zuströmende Luft 5' und mit der Abwärme 5 der Kathodenseite 3 auch der der Anodenseite 2 zuströmende Brennstoff 4' mit aufgewärmt werden können. Dabei kann die Abwärme 4, 5 sowohl direkt aus der Brennstoffzelle 1 als auch indirekt über die die Brennstoffzelle verlassenden Abgase abgeführt werden.

Die schematisierte Darstellung der Figur 1 läßt offen, ob die Abwärme über extern in der Abgasleitung der Anodenseite 2 oder Kathodenseite 3 eingebaute Wärmetauscher oder über in die Brennstoffzelle 1 selbst integrierte Heizflächen ausgetragen wird. Beide Lösungen oder Kombinationen sind wärmetechnisch gleichwertig. Wesentlich ist, daß mit diesen Maßnahmen oder mit der Kombination dieser Maßnahmen der Massenstrom der Verbrennungsluft 5' und auch des Brennstoffs 4' nahe dem stöchiometrisch erforderlichen Wert gewählt werden kann.

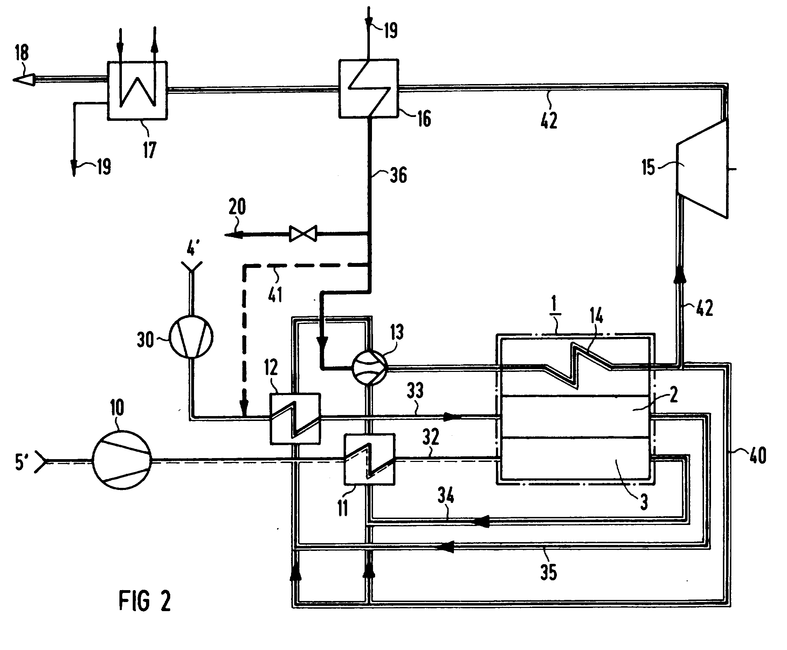

Die Figur 2 zeigt in schematischer Darstellung eine konkrete Ausgestaltung eines erfindungsgemäßen Hochtemperatur-Brennstoffzellen-Blocks 1. In der in der Figur 2 dargestellten Ausführungsform umfaßt dieser Brennstoffzellen-Block 1 eine Hochtemperatur-Brennstoffzelle mit einer schematisch angedeuteten Anodenseite 2 und Kathodenseite 3 sowie einer integrierten Wärmetauscherheizfläche 14. Die Anodenseite ist an eine Brennstoffzuführungsleitung 33 angeschlossen, der ein Gasverdichter 30 und ein Wärmetauscher 12 zur Vorwärmung des Brennstoffs 4' zugeordnet sind. Die Kathodenseite ist an eine Sauerstoff- oder Luftzuführungsleitung 32 angeschlossen, der ein Gasverdichter 10 und ein Wärmetauscher 11 zur Vorwärmung des einströmenden Sauerstoffs oder der Luft zugeordnet sind.

Im Ausführungsbeispiel der Figur 2 führt die Gasabzugsleitung 35 für das Anodenabgas durch den Wärmetauscher 12 für den Brennstoff 4' und mündet in einen als Ejector ausgebildeten Mischer 13. In ähnlicher Weise ist in der Gasabzugsleitung 34 für das Kathodenabgas vor der Einleitung in den Mischer 13 der Wärmetauscher 11 für den Sauerstoff geschaltet. Vom Mischer 13 aus führt eine Abgasleitung 42 über die in die Brennstoffzelle integrierte Wärmetauscherheizfläche 14 zu einer Gasturbine 15. Solche Gasturbinen, die wie hier ohne Verdichterteil und ohne Brennkammer auskommen, werden auch häufig als Gasentspannungsturbinen bezeichnet. Von dieser Gasturbine 15 führt die Abgasleitung 42 in in einen Dampferzeuger 16 und über einen Kondensator 17 nach außen. Die Dampfleitung 36 des Dampferzeugers 16 ist an den Mischer 13 angeschlossen. Sie treibt den Ejector an. Sie enthält auch einen Abzweig, über den mittels eines Ventils Prozeßdampf 20 abgezogen werden kann. Der Kondensator 17 enthält einen Kondensatabzug 19, der wiederum eingangsseitig an den Dampferzeuger 16 angeschlossen ist.

Beim Betrieb des Brennstoffzellen-Blocks 1 wird über den Gasverdichter 30 im vorliegenden Fall Wasserstoffgas 4' als Brennstoff in die Brennstoffzuführungsleitung 33 gedrückt und im Wärmetauscher 12 mit dem über die Abgasleitung 35 herangeführten Anodenabgas annähernd auf Brennstoffzellentemperatur aufgeheizt, bevor es in die Anodenseite der Brennstoffzelle eingeleitet wird. In analoger Weise wird Sauerstoff oder Luft 5' über den Gasverdichter 10 verdichtet und über die Sauerstoff- bzw. Luftzuführungsleitung 32 in den Wärmetauscher 11 gedrückt, dort auf annähernd Brennstoffzellentemperatur aufgeheizt und sodann in die Kathodenseite 3 der Brennstoffzelle eingeleitet. In der Brennstoffzelle wird in hier nicht weiter dargestellter Weise durch Oxidation des Brennstoffs 4' mit dem Sauerstoff 5' elektrischer Strom erzeugt. Das anodenseitige Abgas, im wesentlichen das Verbrennungsprodukt Wasser, wird über die Anodenabgasleitung 35 abgezogen. Es durchströmt den Wärmetauscher 12, in dem es einen Teil seiner fühlbaren Wärme an den frisch zuströmenden Brennstoff 4' abgibt. Sodann wird es in den Mischer 13 geleitet. In ähnlicher Weise wird das Abgas der Kathodenseite 3 über die Kathodenabgasleitung 34 abgezogen und durch den Wärmetauscher 11 in den Mischer 13 geleitet. Im Wärmetauscher 11 gibt das abströmende Kathodenabgas, welches im wesentlichen aus Inertgas, wie zum Beispiel Stickstoff, besteht, einen Teil seiner fühlbaren Wärme an die frisch zuströmende Luft bzw. Sauerstoff 5' ab.

Im Mischer 13 werden das Anodenabgas, das Kathodenabgas sowie über die Dampfleitung 36 zuströmender Frischdampf miteinander gemischt. Dieses Gasgemisch wird über die Abgasleitung 42 durch die in der Brennstoffzelle 1 integrierte Wärmetauscherheizfläche 14 hindurch in die Gasturbine 15, die hier als Entspannungsturbine arbeitet, geleitet. Die Gasturbine 15 treibt in hier nicht weiter dargestellter Weise die beiden Gasverdichter 10 und 30 an. Sie kann darüber hinaus über einen Generator (nicht dargestellt) zur Erzeugung von elektrischer Leistung herangezogen werden. Das Abgas der Gasturbine 15 durchströmt dann nacheinander den Dampferzeuger 16 und den Kondensator 17. Im Dampferzeuger 16 wird mit der restlichen fühlbaren Wärme des Abgases Dampf erzeugt, der über die Dampfleitung 36 teilweise dem Mischer 13, teilweise auch als Prozeßdampf 20 einem weiteren angeschlossenen Verfahren zugeführt werden kann. Das weitgehend abgekühlte Abgas der Gasturbine wird sodann im Kondensator 17 getrocknet, bevor es als trockenes Abgas 18 abgeleitet wird. Das im Kondensator abgeschiedene Kondensat 19 kann wiederum dem Dampferzeuger 16 zur Dampferzeugung zugeführt werden.

Über eine Rezirkulationsleitung 40 kann bedarfsweise heißes Abgas aus der internen Heizfläche 14 in die Wärmetauscher 11, 12 geleitet werden. Auf diese Weise kann der Wärmeeintrag in diese Wärmetauscher 11, 12 erhöht werden.

Der Vorteil dieses Brennstoffzellen-Kraftwerks ist es, daß die Wärme des Abgases sowohl der Kathodenseite 3 als auch der Anodenseite 2 zur Aufwärmung der in die Brennstoffzelle einströmenden Gase verwandt wird. Dabei wird nicht nur die fühlbare Wärme der beiden Abgase benutzt, sondern es wird zugleich auch durch das zusätzliche, über die Rezirkulationsleitung 40 zuströmende Abgas sichergestellt, daß diese Abwärme die einströmenden Gase 4', 5' auf ein Temperaturniveau aufheizen, das annähernd dem Temperaturniveau der Brennstoffzelle entspricht. Dadurch werden größere Temperaturunterschiede zwischen den einströmenden Gasen 4', 5' und dem Abgas, die im Material der Brennstoffzelle 1 zu Wärmespannungen führen könnten, vermieden. Zugleich wird so auch sichergestellt, daß dies bei allen Betriebszuständen, also sowohl beim Hochfahren der Leistung der Brennstoffzelle als auch bei deren Leistungsreduzierung, gewährleistet ist. Des weiteren ist es von besonderem Vorteil, daß bei diesem Brennstoffzellen-Kraftwerk die in den Wärmetauschern 11 und 12 teilweise abgekühlten Abgase der Brennstoffzelle in die integrierte Wärmetauscherheizfläche 14 der Brennstoffzelle eingeleitet und dort erneut aufgeheizt werden. Hierdurch werden ein und dieselbe Gasanteile mehrfach zum Wärmeaustrag aus der Brennstoffzelle genutzt. Dies hat den vorteilhaften Nebeneffekt, daß die in der Brennstoffzelle einströmenden Gasmengen einzig und allein nach stöchiometrischen Erfordernissen gewählt werden können und nicht etwa aus Kühlzwecken Überschußmengen verdichet, aufgeheizt und zusätzlich in die Brennstoffzelle eingeleitet werden müssen. Dieser Effekt wird noch weiter verstärkt, wenn mit dem aus der integrierten Wärmetauscherheizfläche 14 ausströmenden Abgas in dem Dampferzeuger 16 Dampf erzeugt wird, der über die Dampfleitung 36 und den Mischer 13 ebenfalls in die integrierte Wärmetauscherheizfläche 14 eingeleitet wird. Dadurch kann die Kühlleistung auf dem relativ hohen Temperaturniveau der Brennstoffzelle weiter intensiviert werden. Die an die integrierten Wärmetauscherheizflächen 14 angeschlossene Gasturbine 15 liefert bei dieser Anordnung auch die Energie für den Antrieb der Gasverdichter 10 und 30. Darüber hinaus kann sie auch noch zusätzliche elektrische Energie durch Antrieb eines Generators beisteuern. Das in dem Dampferzeuger 16 verbrauchte Wasser kann über das Kondensat aus dem Kondensator 17 weitestgehend abgedeckt werden, wenn kein Prozeßdampf 20 für externe Anwendungen abgezogen wird.

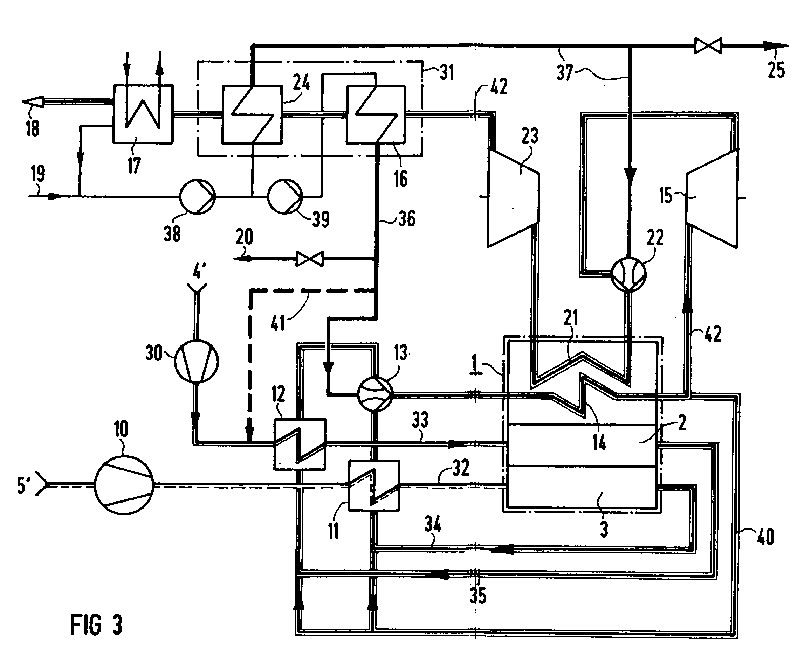

Die Figur 3 zeigt eine weitere Ausgestaltung des Brennstoffzellen-Kraftwerks der Figur 2. Auch hier ist mit 1 eine Hochtemperatur-Brennstoffzelle, in Wirklichkeit ein Hochtemperatur-Brennstoffzellen-Block, bezeichnet. Es sind die Anodenseiten 2 und Kathodenseiten 3 schematisiert angedeutet. Wie im Ausführungsbeispiel der Figur 2 sind der Brennstoffzuführungsleitung 33 sowohl ein Gasverdichter 30 als auch ein Wärmetauscher 12 zugeordnet und sind der Zuführungsleitung 32 für Luftsauerstoff ein Gasverdichter 10 und ein Wärmetauscher 11 zugeordnet. Die beiden Wärmetauscher 11 und 12 sind ihrerseits wiederum an die Kathodenabgasleitung 34 bzw. an die Anodenabgasleitung 35 angeschlossen. Beide Leitungen 34, 35 münden in den als Ejector 13 ausgebildeten Mischer. Sie führen gemeinsam über die in die Hochtemperatur-Brennstoffzelle 1 integrierte Wärmetauscherheizfläche 14 und die Abgasleitung 42 in eine Gasturbine 15, die in diesem Fall als Mitteldruckgasturbine ausgebildet ist.

Abweichend vom Ausführungsbeispiel der Figur 2 ist im Ausführungsbeispiel der Figur 3 an der Abgasleitung 42 der Mitteldruckgasturbine 15 ein weiterer, als Ejector 22 ausgebildeter Mischer angeschlossen. Auch ist die den Mischer 22 verlassende Abgasleitung 42 an eine in den Brennstoffzellen-Block 1 integrierte Zwischenüberhitzerheizfläche 21 angeschlossen. Von dieser Zwischenüberhitzerheizfläche 21 führt die Abgasleitung 42 in eine Niederdruckgasturbine 23, von der Niederdruckgasturbine 23 in einen Abhitzedampferzeuger 31 und vom Abhitzedampferzeuger 31 wieder in den Kondensator 17 zur Trocknung des Abgases. Der Abhitzedampferzeuger 31 enthält sowohl einen Niederdruckdampferzeuger 24 als auch einen Mitteldruckdampferzeuger 16. Die Kondensatleitung 19 des Kondensators 17 ist über eine Speisewasserpumpe 38 an den Heizflächen des Niederdruckdampferzeugers 24 angeschlossen. Die Dampfleitung 37 für den Niederdruckdampf ist an den Mischer 22 nach der Mitteldruckdampfturbine 15 angeschlossen. Die Speisewasserleitung für den Niederdruckdampferzeuger 24 enthält einen Abzweig mit einer weiteren Speisewasserpumpe 39, über die der Mitteldruckdampferzeuger 16 des Abhitzedampferzeugers 31 mit Speisewasser versorgt wird. Dieser Mitteldruckdampferzeuger 16 ist über die Dampfleitung 36 an den Mischer 13 angeschlossen. Beide Dampfleitungen 36 und 37 enthalten je einen Abzweig 25 bzw. 20, um Mitteldruckprozeßdampf 20 bzw. Niederdruckprozeßdampf 25 für ein nachgeschaltetes Verfahren abzuzweigen. Außerdem ist wieder an die Abgasleitung 42 hinter der integrierten Wärmetauscherheizfläche 14 eine Rezirkulationsleitung 40 angeschlossen, die an die Gasabzugsleitungen 34, 35 vor deren Einmündung in die Wärmetauscher 11, 12 führt.

Durch die in der Figur 3 gezeigte Weiterbildung des Brennstoffzellen-Kraftwerks der Figur 2 wird über eine stärkere Druckaufladung der Brennstoffzelle die Voraussetzung für einen verstärkten Wärmeaustrag aus dem Hochtemperatur-Brennstoffzellen-Block 1 geschaffen, der sowohl durch den Wärmeaustrag der Abgase der Anoden- und Kathodenseiten als auch über den Wärmeaustrag dieser Abgase aus der integrierten Wärmetauscherheizfläche 14 und der Zwischenüberhitzerheizfläche 21 des Brennstoffzellen-Blocks 1 erfolgt. Des weiteren wird der Wärmeaustrag sowohl aus der integrierten Wärmetauscherheizfläche 14 als auch aus der integrierten Zwischenüberhitzerheizfläche 21 des Brennstoffzellen-Blocks 1 dadurch vergrößert, daß hier nicht nur die Abgasmassen aufgeheizt, sondern darüber hinaus auch der in den beiden Mischern 13 und 22 eingedüste Dampf mit aufgeheizt werden kann. Dadurch steigt außerdem noch die an den Mitteldruck- und Niederdruckdampfturbinen 15 und 23 verfügbare Wellenleistung an, die es ermöglicht, über hier nicht weiter dargestellte Generatoren elektrische Energie zu erzeugen. Auch hier wiederum wird, sofern nicht Prozeßdampf 20, 25 für externe Verfahren abgezweigt wird, der gesamte Wasserbedarf durch die Rückführung des Kondensats aus dem Kondensator 17 im wesentlichen abgedeckt.

Sowohl im Hochtemperatur-Brennstoffzellen-Kraftwerk der Figur 2 als auch in jenem der Figur 3 kann dem zuströmenden kohlenwasserstoffhaltigen Brennstoff 41 über eine Anschlußleitung 41 an die Dampfleitung 36 Wasserdampf zugemischt werden, um über die Wassergasreaktion zusätzlichen Wasserstoff zu erzeugen und so auch den Kohlenstoffanteil des Brennstoffs 4' zur Energiegewinnung auszunutzen.

## Patentansprüche

1. Verfahren zur Nutzung der Abwärme einer Brennstoffzelle, insbesondere einer Hochtemperatur-Brennstoffzelle oder eines Hochtemperatur-Brennstoffzellen-Blockes (1), wobei die aus der Brennstoffzelle oder Brennstoffzellen-Block ausgekoppelte Wärme (4, 5, 6) sowohl zur Vorwärmung von zuströmendem Brennstoff (4') und/oder zur Vorwärmung von zuströmendem Sauerstoff oder Sauerstoffträgergas (5') als auch zur Nutzung in einer der Brennstoffzelle bzw. dem Brennstoffzellen-Block (1) nachgeschalteten oder parallelgeschalteten Anlage (16, 17, 31) herangezogen wird, wobei das aus der Brennstoffzelle bzw. dem Brennstoffzellen-Block (1) ausströmende, einen Wärmeaustrag bewirkende Kathodenabgas und/oder Anodenabgas zunächst durch einen Wärmetauscher (11, 12) zur Vorwärmung des zuströmenden Brennstoffs (4') und/oder Sauerstoffs oder Sauerstoffträgergases (5') geleitet wird und die in der Brennstoffzelle oder im Brennstoffzellen-Block (1) entstehende Wärme direkt ausgekoppelt (6) und in einem beliebigen nach- oder parallelgeschaltetem Prozeß genutzt wird und/oder das in einem Wärmetauscher (11,12) abgekühlte Kathodenabgas und/oder Anodenabgas anschließend zum weiteren Wärmeaustrag an einer in der Brennstoffzelle bzw. im Brennstoffzellen-Block (1) integrierten Wärmetauscherflächen (14, 21) entlanggeleitet wird.

2. Verfahren nach Anspruch 1,
dadurch gekennzeichnet,
daß der der Brennstoffzelle bzw. dem Brennstoffzellen-Block (1) zuströmende Brennstoff (4') und/oder der Sauerstoff bzw. das Sauerstoffträgergas (5') verdichtet wird und daß das der Brennstoffzelle bzw. dem Brennstoffzellen-Block (1) entströmende Abgas in mindestens einer Gasturbine (15, 23) entspannt wird.

3. Verfahren nach Anspruch 2,
dadurch gekennzeichnet,
daß das verdichtete, der integrierten Wärmetauscherheizfläche (14, 21) entströmende Abgas in der Gasturbine (15, 23) entspannt wird.

4. Verfahre nach einem der Ansprüche 1 bis 3,
dadurch gekennzeichnet,
daß in einem der Brennstoffzelle bzw. dem Brennstoffzellen-Block (1) nachgeschalteten oder parallelgeschalteten Anlagenteil (16, 24, 31) Dampf erzeugt wird.

5. Verfahren nach Anspruch 4,
dadurch gekennzeichnet,
daß der Dampf dem Abgas in Strömungsrichtung des Abgases nach dem Wärmetauscher (11, 12) für die Aufheizung des der Brennstoffzelle bzw. dem Brennstoffzellen-Block (1) zuströmenden Brennstoffs (4') und/oder des Sauerstoffs bzw. Sauerstoffträgers und vor der Gasturbine (15, 23) zugemischt wird.

6. Verfahren nach einem der Ansprüche 2 bis 5,
dadurch gekennzeichnet,
daß das Abgas der Gasturbine (15, 23) zur Dampfgewinnung in einem der Gasturbine nachgeschalteten Anlagenteil (16 24, 31) geleitet wird.

7. Verfahren nach einem der Ansprüche 1 bis 6,
dadurch gekennzeichnet,
daß das Abgas der Gasturbine (15, 23) nach der Wärmeabgabe im Anlagenteil (16, 24, 31) zur Wasserrückgewinnung in einen Abgaskondensator (17) geleitet wird.

8. Verfahren nach einem der Ansprüche 2 bis 7,
dadurch gekennzeichnet,
daß das aus der Gasturbine (15) austretende teilentspannte Abgas zur weiteren Wärmeauskopplung in einem in der Brennstoffzelle bzw. im Brennstoffzellen-Block (1) integrierten Wärmetauscher (21) geleitet, zwischenüberhitzt und sodann in einer weiteren Gasturbine (23) entspannt wird.

9. Verfahren nach einem der Ansprüche 7 oder 8,
dadurch gekennzeichnet,
daß die im Abgaskondensator (17) gewonnene Wärme zu Heizzwecken verwendet wird.

10. Wärmeauskopplungseinrichtung zur Nutzung der Abwärme einer Brennstoffzelle, insbesondere einer Hochtemperatur-Brennstoffzelle, wobei an der Gaszuführungsleitung (32, 33) zur Kathode (3) bzw. zur Anode (2) einer Brennstoffzelle bzw. eines Brennstoffzellen-Blocks (1) zumindest ein Wärmetauscher (11, 12) angeschlossen ist, der seinerseits an die Gasabzugsleitung (34, 35) für das Kathodenabgas und/oder das Anodenabgas angeschlossen ist, wobei die Gasabzugsleitung (34, 35) für das Kathodenabgas und/oder Anodenabgas in Strömungsrichtung hinter dem Wärmetauscher (11, 12) für die Gaszuführungsleitung (32, 33) zur Anode und/oder Kathode an einer in die Brennstoffzelle bzw. in den Brennstoffzellen-Block (1) integrierten Wärmetauscherheizfläche (14) angeschlossen ist und/oder die Zellwärme in der Brennstoffzelle bzw. dem Brennstoffzellen-Block (1) über in der Brennstoffzelle bzw. dem Brennstoffzellen-Block (1) selbst integrierte Wärmeaustauscherflächen ausgetragen wird.

11. Wärmeauskopplungseinrichtung nach Anspruch 10,
dadurch gekennzeichnet,
daß die Gasabzugsleitung (34, 35) des Kathodenabgases und/oder des Anodenabgases an zumindest einen Wärmetauscher (16, 24, 17) einer nachgeschalteten Anlage (31) angeschlossen ist.

12. Wärmeauskopplungseinrichtung nach Anspruch 11,
dadurch gekennzeichnet,
daß der Wärmetauscher in der nachgeschalteten Anlage ein Dampferzeuger (16, 24, 31) ist.

13. Wärmeauskopplungseinrichtung nach Anspruch 12,
dadurch gekennzeichnet,
daß der Dampferzeuger (16, 24, 31) dampfseitig an der Gasabzugsleitung (34, 35) für das Kathodenabgas und/oder Anodenabgas in Strömungsrichtung vor der integrierten Wärmetauscherheizfläche (14) angeschlossen ist.

14. Wärmeauskopplungseinrichtung nach einem der Ansprüche 10 bis 13,
dadurch gekennzeichnet,
daß der Gaszuführungsleitung (32, 33) zur Kathode (3) und/oder Anode (2) ein Gasverdichter (10, 30) und der entsprechenden Abgasleitung (34, 35, 42) eine Gasturbine (15, 23) zugeordnet sind.

15. Wärmeauskopplungseinrichtung nach Anspruch 14,
dadurch gekennzeichnet,
daß der Dampferzeuger (16, 24) als Abhitzekessel (31) an die Gasabzugsleitug (34, 32, 42) hinter der Gasturbine (15, 23) angeschlossen ist.

16. Wärmeauskopplungseinrichtung nach einem der Ansprüche 10 bis 15,
dadurch gekennzeichnet,
daß die Gasabzugsleitung (34, 35, 42) in Strömungsrichtung hinter der Gasturbine (15) über Zwischenüberhitzerheizflächen (21) der Brenstoffzelle bzw. des Brennstoffzellen-Blocks (1) und über weitere Wärmetauscher (16, 24, 17) geführt ist.

17. Wärmeauskopplungseinrichtung nach einem der Ansprüche 14 bis 16,
dadurch gekennzeichnet,
daß eine zweite Gasturbine (23) an der Gasabzugsleitung (34, 35, 42) in Strömungsrichtung des Abgases hinter der Gasturbine (15) und hinter der Zwischenüberhitzerheizfläche (21) und vor dem Wärmetauscher (16, 24, 17) angeschlossen ist.

18. Wärmeauskopplungseinrichtung nach einem der Ansprüche 10 bis 17,
dadurch gekennzeichnet,
daß der Wärmetauscher (16, 24) Bestandteil eines Abhitzedampferzeugers (31) ist.

19. Wärmeauskopplungseinrichtung nach einem der Ansprüche 10 bis 18,
dadurch gekennzeichnet,
daß die Zwischenüberhitzerheizfläche (21) in der Brennstoffzelle bzw. im Brennstoffzellen-Block (1) integriert ist.

20. Wärmeauskopplungseinrichtung nach einem der Ansprüche 10 bis 19,
dadurch gekennzeichnet,
daß eine Dampfleitung (36) des Abhitzedampferzeugers (16, 31) an der Abgasleitung (34, 35) vor der integrierten Wärmetauscherheizfläche (14) angeschlossen ist, eine Niederdruckdampfleitung (37) des Abhitzedampferzeugers (31) an einen Mischer (22) in die Gasabzugsleitung (42) der ersten Gasturbine (15) vor der Zwischenüberhitzerheizfläche (21) angeschlossen ist und abströmseitig an dem Abhitzedampferzeuger (31) ein Abgaskondensator (17) zur Abgastrocknung eingebaut ist.

21. Wärmeauskopplungseinrichtung nach einem der Ansprüche 10 bis 20,
dadurch gekennzeichnet,
daß die Kathodenabgasleitung (34) und die Anodenabgasleitung (35) in einem Mischer (13, 22) münden.

## Claims

1. Process for utilising the waste heat from a fuel cell, in particular a high-temperature fuel cell or a high-temperature fuel cell block (1), drawing on the heat (4, 5, 6) decoupled from the fuel cell or fuel cell block both for preheating inflowing fuel (4') and/or preheating inflowing oxygen or oxygen carrier gas (5') and also for use in an installation (16, 17, 31) installed downstream of or in parallel with the fuel cell or fuel cell block (1), with the cathode exhaust gas and/or anode exhaust gas which flows out of the fuel cell or fuel cell block (1) and gives rise to a heat discharge being guided first through a heat exchanger (11, 12) to preheat the inflowing fuel (4') and/or the oxygen or oxygen carrier gas (5') and with the heat arising in the fuel cell or fuel cell block (1) being decoupled (6) in direct manner and used in any process installed downstream or in parallel and/or the cathode exhaust gas and/or anode exhaust gas which has been cooled in a heat exchanger (11, 12) being guided subsequently along heat exchanger surfaces (14, 21) integrated in the fuel cell or fuel cell block (1) in order to discharge further heat.

2. Process according to Claim 1, characterised in that the fuel (4') flowing into the fuel cell or fuel cell block (1) and/or the oxygen or oxygen carrier gas (5') is compressed, and that the exhaust gas flowing from the fuel cell or fuel cell block (1) is expanded in at least one gas turbine (15, 23).

3. Process according to Claim 2, characterised in that the compressed exhaust gas flowing from the integrated heat exchanger heating surface (14, 21) is expanded in the gas turbine (15, 23).

4. Process according to one of Claims 1 to 3, characterised in that steam is generated in an installation part (16, 24, 31) which is installed downstream of or in parallel with the fuel cell or fuel cell block (1).

5. Process according to Claim 4, characterised in that the steam is admixed with the exhaust gas in the direction of flow of the exhaust gas downstream of the heat exchanger (11, 12) for heating up the fuel (4') and/or oxygen or oxygen carrier flowing into the fuel cell or fuel cell block (1) and upstream of the gas turbine (15, 23).

6. Process according to one of Claims 2 to 5, characterised in that the exhaust gas from the gas turbine (15, 23) is guided for obtaining steam in an installation part (16, 24, 31) installed downstream of the gas turbine.

7. Process according to one of Claims 1 to 6, characterised in that the exhaust gas from the gas turbine (15, 23) is guided into an exhaust gas condenser (17) for water recovery after the release of heat in the installation part (16, 24, 31) .

8. Process according to one of Claims 2 to 7, characterised in that the partially expanded exhaust gas discharging from the gas turbine (15) is guided for further heat decoupling in a heat exchanger (21) integrated in the fuel cell or fuel cell block (1), undergoes intermediate superheating and is then expanded in a further gas turbine (23).

9. Process according to one of Claims 7 or 8, characterised in that the heat obtained in the exhaust gas condenser (17) is used for heating purposes.

10. Heat decoupling device for utilising the waste heat from a fuel cell, in particular a high-temperature fuel cell, with there being connected to the gas supply line (32, 33) to the cathode (3) or to the anode (2) of a fuel cell or fuel cell block (1) at least one heat exchanger (11, 12) which is itself connected to the gas removal line (34, 35) for the cathode exhaust gas and/or anode exhaust gas, with the gas removal line (34, 35) for the cathode exhaust gas and/or anode exhaust gas being connected, in the direction of flow downstream of the heat exchanger (11, 12) for the gas supply line (32, 33) to the anode and/or cathode, to a heat exchanger heating surface (14) integrated in the fuel cell or fuel cell block (1) and/or the cell heat in the fuel cell or fuel cell block (1) being discharged by way of heat exchanger surfaces which are themselves integrated in the fuel cell or fuel cell block (1).

11. Heat decoupling device according to Claim 10, characterised in that the gas removal line (34, 35) of the cathode exhaust gas and/or anode exhaust gas is connected to at least one heat exchanger (16, 24, 17) of an installation installed downstream (31).

12. Heat decoupling device according to Claim 11, characterised in that the heat exchanger in the installation installed downstream is a steam generator (16, 24, 31).

13. Heat decoupling device according to Claim 12, characterised in that the steam generator (16, 24, 31) is connected on the steam side to the gas removal line (34, 35) for the cathode exhaust gas and/or anode exhaust gas in the direction of flow upstream of the integrated heat exchanger heating surface (14).

14. Heat decoupling device according to one of Claims 10 to 13, characterised in that there is assigned respectively to the gas supply line (32, 33) to the cathode (3) and/or anode (2) a gas compressor (10, 30) and to the corresponding exhaust gas line (34, 35, 42) a gas turbine (15, 23).

15. Heat decoupling device according to Claim 14, characterised in that the steam generator (16, 24) is connected as a waste heat boiler (31) to the gas removal line (34, 32, 42) downstream of the gas turbine (15, 23).

16. Heat decoupling device according to one of Claims 10 to 15, characterised in that the gas removal line (34, 35, 42) leads in the direction of flow downstream of the gas turbine (15) by way of heating surfaces for intermediate superheating (21) of the fuel cell or fuel cell block (1) and by way of further heat exchangers (16, 24, 17).

17. Heat decoupling device according to one of Claims 14 to 16, characterised in that a second gas turbine (23) is connected to the gas removal line (34, 35, 42) in the direction of flow of the exhaust gas downstream of the gas turbine (15) and downstream of the heating surface for intermediate superheating (21) and upstream of the heat exchanger (16, 24, 17).

18. Heat decoupling device according to one of Claims 10 to 17, characterised in that the heat exchanger (16, 24) is a constituent part of a waste heat steam generator (31).

19. Heat decoupling device according to one of Claims 10 to 18, characterised in that the heating surface for intermediate superheating (21) is integrated in the fuel cell or fuel cell block (1).

20. Heat decoupling device according to one of Claims 10 to 19, characterised in that a steam line (36) of the waste heat steam generator (16, 31) is connected to the exhaust gas line (34, 35) upstream of the integrated heat exchanger heating surface (14), a low-pressure steam line (37) of the waste heat steam generator (31) is connected to a mixer (22) into the gas removal line (42) of the first gas turbine (15) upstream of the heating surface for intermediate superheating (21), and on the downstream side on the waste heat steam generator (31) there is incorporated an exhaust gas condenser (17) for drying the exhaust gas.

21. Heat decoupling device according to one of Claims 10 to 20, characterised in that the cathode exhaust gas line (34) and the anode exhaust gas line (35) open into a mixer (13, 22).

## Revendications

1. Procédé pour l'utilisation de la chaleur dégagée par une pile à combustible, en particulier par une pile à combustible haute température ou par un bloc de piles à combustible haute température (1), caractérisé en ce que la chaleur (4, 5, 6) récupérée sur la pile à combustible ou sur le bloc de piles à combustible est utilisée aussi bien pour le préchauffage de l'arrivée du combustible (4') et/ou pour le préchauffage de l'arrivée de l'oxygène ou du gaz véhiculant l'oxygène (5') que pour servir dans une installation (16, 17, 31) fonctionnant en aval ou en parallèle avec la pile à combustible ou avec le bloc de piles à combustible (1) et dans lequel le gaz s'échappant à la cathode et/ou à l'anode, qui sort de la pile à combustible ou du bloc de piles à combustible (1) en effectuant une extraction de chaleur, est tout d'abord envoyé sur un échangeur de chaleur (11, 12) pour préchauffer l'arrivée du combustible (4') et/ou de l'oxygène ou du gaz véhiculant l'oxygène (5'), la chaleur présente dans la pile à combustible ou dans le bloc de piles à combustible (1) étant directement extraite (6) et utilisée dans un processus au choix fonctionnant en aval ou en parallèle, et/ou le gaz s'échappant à la cathode et/ou à l'anode, après refroidissement par passage sur un échangeur de chaleur (11, 12) étant ensuite passé, pour une nouvelle extraction de chaleur, sur la surface d'échange de chaleur (14, 21) intégrée à la pile à combustible ou au bloc de piles à combustible (1).

2. Procédé selon la revendication 1, caractérisé en ce que l'arrivée du combustible (4') et/ou l'arrivée de l'oxygène ou du gaz véhiculant l'oxygène (5') sur la pile à combustible ou sur le bloc de piles à combustible (1) est comprimée et que le gaz évacué de la pile à combustible ou du bloc de piles à combustible (1) est détendu dans au moins une turbine à gaz (15, 23).

3. Procédé selon la revendication 2, caractérisé en ce que le gaz comprimé sortant de la surface d'échange de chaleur intégrée (14, 21) est détendu dans la turbine à gaz (15, 23).

4. Procédé selon l'une quelconque des revendications 1 à 3, caractérisé en ce que de la vapeur est produite dans une partie d'installation (16, 24, 31) fonctionnant en aval ou en parallèle avec la pile à combustible ou avec le bloc de piles à combustible (1).

5. Procédé selon la revendication 4, caractérisé en ce que la vapeur est mélangée au gaz d'échappement en aval de l'échangeur de chaleur (11, 12) pour chauffer l'arrivée du combustible (4') et/ou de l'oxygène ou du gaz véhiculant l'oxygène (5') sur la pile à combustible ou sur le bloc de piles à combustible (1) et en amont de la turbine à gaz (15, 23).

6. Procédé selon l'une quelconque des revendications 2 à 5, caractérisé en ce que le gaz d'échappement de la turbine à gaz (15, 23) est envoyé dans une partie d'installation (16, 24, 31) en aval de la turbine à gaz, pour la récupération de la vapeur.

7. Procédé selon l'une quelconque des revendications 1 à 6, caractérisé en ce que le gaz d'échappement de la turbine à gaz (15, 23), après extraction de chaleur dans la partie d'installation (16, 24, 31) est envoyé dans un condenseur de gaz d'échappement (17) pour la récupération de l'eau.

8. Procédé selon l'une quelconque des revendications 2 à 7, caractérisé en ce que le gaz d'échappement sortant de la turbine à gaz (15) partiellement détendu est envoyé sur un échangeur de chaleur (21) intégré à la pile à combustible ou au bloc de piles à combustible (1) et soumis à une surchauffe intermédiaire avant d'être détendu dans une autre turbine à gaz (23).

9. Procédé selon l'une ou l'autre des revendications 7 et 8, caractérisé en ce que la chaleur récupérée dans le condenseur de gaz d'échappement (17) est utilisée à des fins de chauffage.

10. Dispositif de récupération de chaleur pour l'utilisation de la chaleur dégagée par une pile à combustible, en particulier par une pile à combustible haute température, dans lequel, sur la conduite d'arrivée de gaz (32, 33) sur la cathode (3) et/ou sur l'anode (2) d'une pile à combustible ou d'un bloc de piles à combustible (1), est raccordé au moins un échangeur de chaleur (11, 12), lui-même raccordé à la conduite d'évacuation de gaz (34, 35) du gaz émis par la cathode et/ou du gaz émis par l'anode, la conduite d'évacuation de gaz (34, 35) du gaz émis par la cathode et/ou du gaz émis par l'anode étant raccordée en aval, dans le sens de l'écoulement des fluides, de l'échangeur de chaleur (11, 12) de la conduite d'arrivée de gaz (32, 33) sur la cathode et/ou sur l'anode, à une surface d'échange de chaleur (14) intégrée à la pile à combustible ou au bloc de piles à combustible (1), et/ou la chaleur de cellule est extraite par la surface d'échange de chaleur directement intégrée à la pile à combustible ou au bloc de piles à combustible (1).

11. Dispositif de récupération de chaleur selon la revendication 10, caractérisé en ce que la conduite d'évacuation de gaz (34, 35) du gaz émis par la cathode et/ou du gaz émis par l'anode est raccordée à au moins un échangeur de chaleur (16, 24, 17) d'une installation raccordée en aval (31).

12. Dispositif de récupération de chaleur selon la revendication 11, caractérisé en ce que l'échangeur de chaleur de l'installation raccordée en aval est un générateur de vapeur (16, 24, 31).

13. Dispositif de récupération de chaleur selon la revendication 12, caractérisé en ce que le générateur de vapeur (16, 24, 31) est raccordé, côté vapeur, à la conduite d'évacuation de gaz (34, 35) du gaz émis par la cathode et/ou du gaz émis par l'anode, en amont, dans le sens d'écoulement des fluides, de la surface d'échange de chaleur intégrée (14).

14. Dispositif de récupération de chaleur selon l'une quelconque des revendications 10 à 13, caractérisé en ce qu'un compresseur de gaz (10, 30) est prévu sur la conduite d'arrivée de gaz (32, 33) sur la cathode (3) et/ou sur l'anode (2) et qu'une turbine à gaz (15, 23) est prévue sur la conduite d'évacuation de gaz (34, 35, 42) correspondante.

15. Dispositif de récupération de chaleur selon la revendication 14, caractérisé en ce que le générateur de vapeur (16, 24) est raccordé en tant que chaudière de récupération (31) sur la conduite d'évacuation de gaz (34, 35, 42) en aval de la turbine à gaz (15, 23).

16. Dispositif de récupération de chaleur selon l'une quelconque des revendications 10 à 15, caractérisé en ce que la conduite d'évacuation de gaz (34, 35, 42) est raccordée en aval, dans le sens d'écoulement des fluides, de la turbine à gaz (15), sur la surface d'échange d'un surchauffeur intermédiaire (21) de la pile à combustible ou du bloc de piles à combustible (1) et sur d'autres échangeurs de chaleur (16, 24, 17).

17. Dispositif de récupération de chaleur selon l'une quelconque des revendications 14 à 16, caractérisé en ce qu'une seconde turbine à gaz (23) est raccordée sur la conduite d'évacuation de gaz (34, 35, 42) en aval, dans le sens d'écoulement des fluides, de la turbine à gaz (15), en aval également de la surface d'échange du surchauffeur intermédiaire (21) et en amont de l'échangeur de chaleur (16, 24, 17).

18. Dispositif de récupération de chaleur selon l'une quelconque des revendications 10 à 17, caractérisé en ce que l'échangeur de chaleur (16, 24) fait partie intégrante d'un générateur de vapeur à récupération (31).

19. Dispositif de récupération de chaleur selon l'une quelconque des revendications 10 à 18, caractérisé en ce que la surface d'échange du surchauffeur intermédiaire (21) est intégrée à la pile à combustible ou au bloc de piles à combustible (1).

20. Dispositif de récupération de chaleur selon l'une quelconque des revendications 10 à 19, caractérisé en ce qu'une conduite de vapeur (36) du générateur de vapeur à récupération (16, 31) est raccordée à la conduite d'évacuation de gaz (34, 35) en amont de la surface d'échange de chaleur intégrée (14), une conduite de vapeur basse pression (37) du générateur de vapeur à récupération (31) étant raccordée à un mélangeur sur la conduite d'évacuation de gaz (42) de la première turbine à gaz (15) en amont de la surface d'échange du surchauffeur intermédiaire (21) et un condensateur de gaz d'échappement (17) étant monté du côté aval du générateur de vapeur à récupération (31) pour le séchage du gaz.

21. Dispositif de récupération de chaleur selon l'une quelconque des revendications 10 à 20, caractérisé en ce que la conduite d'évacuation de gaz de la cathode (34) et la conduite d'évacuation de gaz de l'anode (35) débouchent dans un mélangeur (13, 22).
